# EUROPEAN PATENT APPLICATION

(11) **EP 3 104 346 A1**
(43) Date of publication of application: **14.12.2016**
(21) Application number: 15171311.2
(22) Date of filing: 10.06.2015
(51) Int. Cl.: G07F 7/10, G06F 21/83

(54) **CODE INPUT**

(71) Applicant: Assa Abloy AB, 107 23 Stockholm (SE)
(72) Inventor: HOLMSTRÖM, Ingemar, 192 56 Sollentuna (SE)
(74) Representative: Kransell & Wennborg KB

(57) **Abstract**

It is presented a method for receiving user input of a code comprising a set of consecutive characters. The method is performed in a code input device and comprising the steps of: determining an active input character of the code; changing a value of the active input character according to a predetermined order in accordance with user input detected on a directional input device of the code input device; showing the value of the active input character on a display of the code input device, the display being separate from the directional input device; storing a current value of the active input character when a character selection condition is true; and repeating the steps of changing the active input character, showing the value and storing a current value, for a new active character until values are stored for all characters of the code.

## Description

### TECHNICAL FIELD

The invention relates to a method, code input device, computer program and computer program product for input of a code.

### BACKGROUND

Code input devices are used for users to enter codes in many products today. Two examples of where code input devices are used are in automatic teller machines (ATMs) and in access control systems for controlling access to doors, etc. The codes are often made up of four consecutive digits, known as a PIN (Personal Identification Number) code.

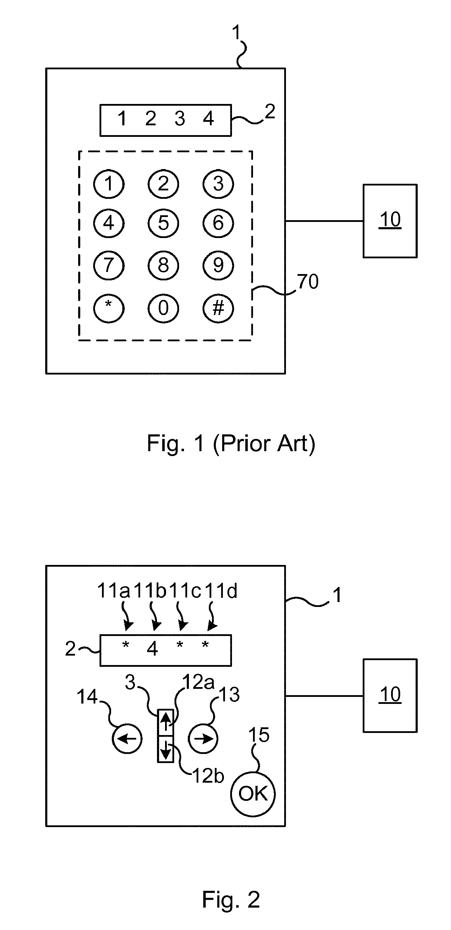

Fig 1 shows a code input device 1 according to the prior art. The code input device 1 comprises a keypad and a display. The code input device 1 is connected to an external device 10 such as an ATM or access control system.

However, the code input device of the prior art poses several security risks. For instance, another person can stand beside and /or behind the person entering the code and is thus able to see what keys are pressed to thereby figure out the sequence of characters that are entered, making up the code.

Another issue is that when a finger pushes the keys of the keypad they leave a heat trace that is possible to read with an infrared camera within a certain period of time after the code has been entered. This is an increasing risk as the availability of low cost infrared cameras increases.

### SUMMARY

According to a first aspect, it is presented a method for receiving user input of a code comprising a set of consecutive characters. The method is performed in a code input device and comprising the steps of: determining an active input character of the code, the active input character having a position corresponding to one character of the set of consecutive characters of the code; changing a value of the active input character according to a predetermined order in accordance with user input detected on a directional input device of the code input device; showing the value of the active input character on a display of the code input device, the display being separate from the directional input device; storing a current value of the active input character when a character selection condition is true; and repeating the steps of changing the active input character, showing the value and storing a current value, for a new active character until values are stored for all characters of the code.

The character selection condition may be user input associated with character selection.

The user input associated with character selection may be user input on a push button.

The character selection condition may be that no user input is detected during a timeout period.

The method may further comprise the step of: determining the active input character to be a previously input character when user input associated with going back is detected.

The method may further comprise the step of: setting an initial value of the active input character to a random value. In such a case, the step of repeating comprises repeating the step of setting an initial value.

The step of changing a value may comprise changing values at different speeds depending on the user input on the directional input device.

According to a second aspect, it is presented a code input device for receiving user input of a code comprising a set of consecutive characters. The code input device comprises: a display; a directional input device, wherein the directional input device is separate from the display; and a controller connected to the directional input device and the display, wherein the controller is configured to cause the code input device to perform a set of operations comprising: determining an active input character of the code, the active input character having a position corresponding to one character of the set of consecutive characters of the code; changing a value of the active input character according to a predetermined order in accordance with user input detected on a directional input device of the code input device; showing the value of the active input character on a display of the code input device, the display being separate from the directional input device; storing a current value of the active input character when a character selection condition is true; and repeating the operations of changing the active input character, showing the value and storing a current value, for a new active character until values are stored for all characters of the code.

The character selection condition may be user input associated with character selection.

The operations may further comprise: determining the active input character to be a previously input character when user input associated with going back is detected.

The operations may further comprise: setting an initial value of the active input character to a random value. In such a case, the operation of repeating comprises repeating the step of setting an initial value.

The operation of changing a value may comprise changing values at different speeds depending on the user input on the directional input device.

The code input device may further comprise a memory storing the set of operations as software instructions. In such a case, the controller is a processor being configured to execute the set of operations.

The code input device may further comprise a viewing angle restriction device restricting a viewing angle of the display, but not for the directional input device.

According to a third aspect, it is presented a computer program for receiving user input of a code comprising a set of consecutive characters. The computer program comprises computer program code which, when run on a code input device causes the code input device to: determine an active input character of the code, the active input character having a position corresponding to one character of the set of consecutive characters of the code; change a value of the active input character according to a predetermined order in accordance with user input detected on a directional input device of the code input device; show the value of the active input character on a display of the code input device, the display being separate from the directional input device; store a current value of the active input character when a character selection condition is true; and repeat the steps of changing the active input character, showing the value and storing a current value, for a new active character until values are stored for all characters of the code.

According to a fourth aspect, it is presented a computer program product comprising a computer program according to claim the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram of a code input device according to the prior art;
Fig 2 is a schematic diagram of a code input device according to one embodiment;
Fig 3 is a schematic diagram of a code input device according to one embodiment;
Fig 4 is a schematic diagram of a code input device according to one embodiment;
Fig 5 is a flow chart illustrating embodiments of methods for receiving user input of a code comprising a set of consecutive characters performed in the code input device of any of Figs 2 to 4 according to one embodiment;
Fig 6 is a schematic diagram illustrating an application of the code input device of Figs 2 to 4 according to one embodiment;
Fig 7 is a schematic diagram illustrating an application of the code input device 1 of Figs 2 to 4 according to one embodiment; and
Fig 8 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Fig 2 is a schematic diagram of a code input device 1 according to one embodiment. The code input device 1 is used to allow a user to input a code. Optionally, the code is an alphanumeric code, containing only digits, only letters, or both. Alternatively or additionally, the code contains characters being other symbols such as letters from alternative alphabets or graphic symbols, such as animals, fruits or different card suits. Optionally, additional characters can also be included. When only digits are used, the code can e.g. be a PIN code comprising a number (e.g. four or six) of consecutive digits. The code input device 1 comprises a display 2. The display 2 is capable of displaying characters of a code. For instance, when the code consists of digits, the display 2 is capable of showing numbers.

The code input device comprises a directional input device 3, which is separate from the display 2. The directional input device 3 here comprises an up section 12a and a down section 12b. When the user presses the up section 12a, the value of a currently active character of the code is increased. On the other hand, when the user presses the down section 12b, the value of a currently active character of the code is decreased. An increasing character value can e.g. imply an increasing digit value or the next character in alphabetical order, and the decreasing character value is a step in the opposite direction.

A back key 14 allows the user to select a position for the currently active character which is one step back. Analogously, a forward key 13 allows the user to select a position for the currently active character which is one step forward. Optionally, a confirmation key 15 is used for the user to indicate when code entry is complete.

The code input device 1 is connected to an external device 10 which makes use of the code that the user enters. The external device 10 can e.g. be a device of an access control system controlling access to doors or other barriers, or an ATM machine, which grants access when the entered code is correct. The code can be combined with other security measures, such as an ATM card, electronic key, etc.

On the display 2, there are several positions 11a-d, each corresponding to a character of the code. The positions proceed from left to right here, so that forward implies a direction towards the right and backward implies a direction towards the left. Of course, other directions of procession are possible, e.g. right-to-left, up-to-down, down-to-up, etc. While four positions 11a-d are shown here, the display can be configured to show any suitable number of positions. In one embodiment, the number of positions in the display is equal to the length of the code (in characters).

When the user enters a code, the active input character is firstly in the first position 11a. The user presses on the up section 12a and/or down section 12b of the directional input device 3 until a character showing in the first position 11a of the display is the first character of the code that the user wants to enter. The user then presses the forward key 13 to proceed to the second position 11b. Optionally, the character in the previous position (first position in this case) is replaced with a generic character such as an asterisk '*' to make it more difficult for someone else seeing the code. Again, the user uses the up section 12a and/or down section 12b of the directional input device to enter the desired character for the second position 11b. This continues for the remaining positions 11c and 11d. Once the characters have been entered for all the positions 11a-d, the user optionally presses the confirmation key 15 to indicate that the code entry is finished. Optionally, the forward key is also used instead of the confirmation key to indicate that the code entry is finished.

Optionally, the user can use the back key 14 to go backwards among the positions 11a-d to modify an incorrectly entered character. The forward key 13 is optional; the code input device can instead proceed to the next position when no user input is detected for a timeout period. Analogously, a timeout can be used to indicate that the code entry is finished.

It is to be noted that the directional input device 3 could optionally consist of a single key, where the value of the currently active character increases each time the single key is pressed.

In embodiments presented herein, each input key does not correspond to a specific character (e.g. digit). Because of this, an infrared camera can not be used after code input to figure out what code had just been entered as for a traditional keypad. The infrared camera can only indicate that the directional input device has been used, but this is the case regardless of what code is input.

In one embodiment, the directional input device 3 is implemented using a proximity sensor, e.g. using infrared diode beams or a camera. In this way, the directional input device can detect the position of a user's hand in various zones, such as an up zone, down zone, forward zone, etc. In this way, the directional input device detects movements or gestures indicating a direction to change the value of the currently active input character. A touch free code entry device can thereby be achieved.

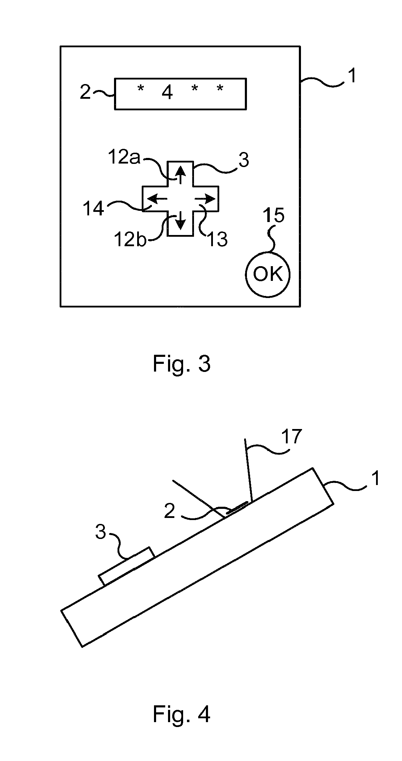

Fig 3 is a schematic diagram of a code input device according to one embodiment. In this embodiment, a single directional input device 3 comprises not only the up section 12a and the down section 12b, but also the forward key 13 (to the right) and back key 14 to the left.

Fig 4 is a schematic diagram of a code input device according to one embodiment. In this embodiment, the display is provided with a viewing angle restriction device 17. In this way, the angle of view from the display is decreased. The viewing angle restriction device 17 can e.g. be implemented using a physical screen/tube, restricted viewing angle of the display 2, optionally in combination with an optical system including e.g. a mirror, etc. This makes it even more difficult for another person to see the characters entered by an active user. Optionally, a face direction detector can be used to dynamically adapt the direction of the viewing angle restriction device 17 depending on the position of the face of the user. The face direction detector can e.g. comprise the use of a camera.

This type of solution is not as useful in the prior art, since in the prior art, the user needs to be able to see what keys are pressed with her/his hand, which would result in a viewing angle restriction device which needs allow the user to see the hand. This results in a much less restrictive viewing angle, thus compromising security. Here, the display viewing angle can be significantly reduced to increase security without sacrificing ease of use.

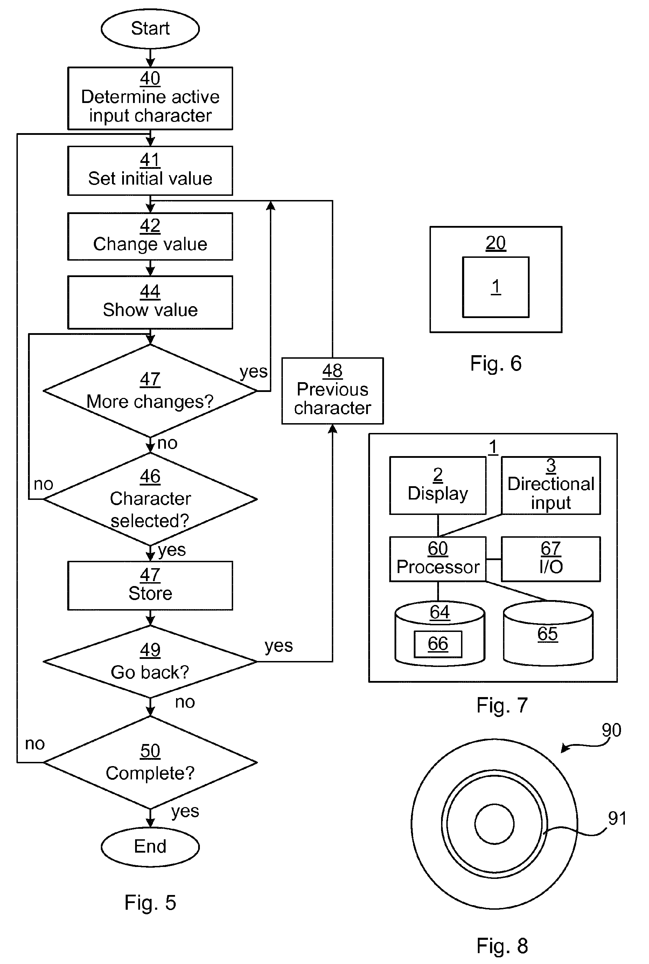

Fig 5 is a flow chart illustrating embodiments of methods for receiving user input of a code comprising a set of consecutive characters performed in the code input device of any of Figs 2 to 4 according to one embodiment.

In a *determine active input character* step 40, an active input character of the code is determined. The active input character has a position corresponding to one character of the set of consecutive characters of the code. For instance, the active input character can correspond to the first position 11a of Fig 2 for the first character of the code.

In an optional *set initial value* step 41, an initial value of the active input character is set. For instance, this can be set to a random (or pseudo-random) value to prevent an attacker from estimating a time of change of character values to thereby determine the entered character.

In a *change value* step 42, a value of the active input character is changed according to a predetermined order in accordance with user input detected on a directional input device of the code input device. The predetermined order can be numerical order and/or alphabetical order. This is intuitive for the user. Optionally, the values are changed at different speeds depending on the user input on the directional input device. For instance, the user input device can be pressure sensitive such that if the user presses the user input device harder, the values are changed faster.

In a *show value* step 44, the value of the active input character is shown on the display of the code input device. As explained above, the display is separate from the directional input device.

In an optional conditional *more changes* step 45, it is determined whether the user performs any more changes. If so, the method returns to the *change value* step 42. Otherwise, the method proceeds to a conditional *character selected* step 46.

In practice, the steps 42, 44 and 45 can be implemented to be performed partly in parallel.

In the conditional *character selected* step 46, it is determined whether a character is selected by evaluating a character selection condition. The character selection condition can be explicit, e.g. by receiving user input (e.g. on a key/push button, 13 and 14 of Fig 2) associated with character selection. Alternatively, the character selection condition is implicit, e.g. that no user input is detected during a timeout period. In such a case, no physical user interface element for the character selection is required.

In a *store* step 47, a current value of the active input character is stored.

In an optional conditional *go back* step 49, it is determined whether user input associated with going back is detected, e.g. by the user pressing the back key 14 in Fig 2. If so, the method proceeds to a *previous character* step 48. Otherwise, the method proceeds to a conditional *complete* step 50.

In the *previous character* step 48, the active input character is determined to be a previously input character, i.e. one step back. The new active input character is determined to be the one in a position immediately before the current active input character.

In a conditional *complete* step 50, it is determined whether the code is complete. This can e.g. be determined when values are stored for all characters of the code. Alternatively, the user also needs to indicate that the code is complete, e.g. by pressing the confirmation key 15 or the forward key 13 of Fig 2 or Fig 3. If the code is not complete, the method returns to the optional *set initial value step 41* or the *change value* step 42 (if step 41 is not performed), but now for a new active character, being in the next position after the current active character. If the code is complete, the method ends.

After this method, the code can be checked whether it is correct or not and appropriate actions can be taken, e.g. by granting or denying access.

Fig 6 is a schematic diagram illustrating an application of the code input device of Figs 2 to 4 according to one embodiment. In this embodiment, the code input device 1 is integrated within a host device 20. The host device 20 is any device where the use of the code input device 1 is of use. For instance, the host device 20 can be a device within an access control system or an ATM machine.

Fig 7 is a schematic diagram illustrating an application of the code input device 1 of Figs 2 to 4 according to one embodiment.

A controller 60 controls the general operation of the code input device 1. The controller 60 can be any combination of one or more of a suitable central processing unit (CPU), multiprocessor, microcontroller unit (MCU), digital signal processor (DSP), application specific integrated circuit (ASIC), field programmable gate array (FPGA) etc., capable of executing software instructions or otherwise configured to perform the operations of Fig 5. For instance, the controller 60 can be capable of executing software instructions 66 stored in a memory 64, which can thus be a computer program product. The controller 60 is thus configured to execute the method described with reference to Fig 5 above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 65 is also provided for reading and/or storing data during execution of software instructions in the controller 60, for instance the characters of the code.

The code input device 1 further comprises an I/O interface 67 for communicating with other entities such as entities of a host device 20 or external device 10. The I/O interface 63 may support wire-based communication, e.g. using Universal Serial Bus (USB), Ethernet, RS-486/RS-232 serial connection or even a simple electric connection. Alternatively or additionally, the I/O interface 63 supports wireless communication, e.g. using Bluetooth, Bluetooth Low Energy (BLE), Radio Frequency Identification (RFID), Near Field Communication (NFC), any of the IEEE 802.11 standards, any of the IEEE 802.15 standards, wireless USB, etc.

The code input device 1 also includes a user interface comprising the display 2 and directional input 3. As shown in Figs 2 and 3, other user input devices can also be included.

When the code input device 1 is provided within a host device, one or more of the components of the code input device 1 can be shared with the host device 20.

Fig 8 shows one example of a computer program product comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Figs 7. While the computer program 91 is here schematically shown as a track on the depicted optical disk, the computer program can be stored in any way which is suitable for the computer program product, such as a removable solid state memory, e.g. a Universal Serial Bus (USB) drive.

The invention has mainly been described above with reference to a few embodiments. However, as is readily appreciated by a person skilled in the art, other embodiments than the ones disclosed above are equally possible within the scope of the invention, as defined by the appended patent claims.

## Claims

**1.** A method for receiving user input of a code comprising a set of consecutive characters, the method being performed in a code input device (1) and comprising the steps of:
determining (40) an active input character of the code, the active input character having a position corresponding to one character of the set of consecutive characters of the code;
changing (42) a value of the active input character according to a predetermined order in accordance with user input detected on a directional input device (3) of the code input device;
showing (44) the value of the active input character on a display of the code input device (1), the display (2) being separate from the directional input device (3);
storing (47) a current value of the active input character when a character selection condition is true; and
repeating (50) the steps of changing the active input character, showing the value and storing a current value, for a new active character until values are stored for all characters of the code.

**2.** The method according to claim 1, wherein the character selection condition is user input associated with character selection.

**3.** The method according to claim 2, wherein the user input associated with character selection is user input on a push button.

**3.** The method according to claim 1, wherein the character selection condition is that no user input is detected during a timeout period.

**4.** The method according to any one of the preceding claims, further comprising the step of:
determining (48) the active input character to be a previously input character when user input associated with going back is detected.

**5.** The method according to any one of the preceding claims, further comprising the step of:
setting (41) an initial value of the active input character to a random value; and
wherein the step of repeating (50) comprises repeating the step of setting an initial value.

**6.** The method according to any one of the preceding claims, wherein the step of changing (42) a value comprises changing values at different speeds depending on the user input on the directional input device (3).

**7.** A code input device (1) for receiving user input of a code comprising a set of consecutive characters, the code input device (1) comprising:
a display (2);
a directional input device (3), wherein the directional input device (3) is separate from the display (2); and
a controller (4) connected to the directional input device (3) and the display (3), wherein the controller (4) is configured to cause the code input device (1) to perform a set of operations comprising:
determining an active input character of the code, the active input character having a position corresponding to one character of the set of consecutive characters of the code;
changing a value of the active input character according to a predetermined order in accordance with user input detected on a directional input device (3) of the code input device;
showing the value of the active input character on a display of the code input device (1), the display (2) being separate from the directional input device (3);
storing a current value of the active input character when a character selection condition is true; and
repeating the operations of changing the active input character, showing the value and storing a current value, for a new active character until values are stored for all characters of the code.

**8.** The code input device (1) according to claim 7, wherein the character selection condition is user input associated with character selection.

**9.** The code input device (1) according to claim 7 or 8, wherein the operations further comprise:
determining the active input character to be a previously input character when user input associated with going back is detected.

**10.** The code input device (1) according to any one of claims 7 to 9, wherein the operations further comprise:
setting an initial value of the active input character to a random value;
and
wherein the operation of repeating comprises repeating the step of setting an initial value.

**11.** The code input device (1) according to any one of claims 7 to 10, wherein the operation of changing a value comprises changing values at different speeds depending on the user input on the directional input device (3).

**12.** The code input device (1) according to any one of claim 7 to 11, further comprising a memory (62) storing the set of operations as software instructions, and wherein the controller (4) is a processor being configured to execute the set of operations.

**13.** The code input device (1) according to any one of claims 7 to 12, further comprising a viewing angle restriction device (17) restricting a viewing angle of the display (2), but not for the directional input device (3).

**14.** A computer program (91) for receiving user input of a code comprising a set of consecutive characters, the computer program comprising computer program code which, when run on a code input device (1) causes the code input device (1) to:
determine an active input character of the code, the active input character having a position corresponding to one character of the set of consecutive characters of the code;
change a value of the active input character according to a predetermined order in accordance with user input detected on a directional input device (3) of the code input device;
show the value of the active input character on a display of the code input device (1), the display (2) being separate from the directional input device (3);
store a current value of the active input character when a character selection condition is true; and
repeat the steps of changing the active input character, showing the value and storing a current value, for a new active character until values are stored for all characters of the code.

**15.** A computer program product (90) comprising a computer program according to claim 14 and a computer readable means on which the computer program is stored.
